(19) Europäisches Patentamt
European Patent Office
Office européen des brevets

(11) **EP 3 532 808 B1**

(12) **EUROPÄISCHE PATENTSCHRIFT**

(45) Veröffentlichungstag und Bekanntmachung des Hinweises auf die Patenterteilung:
**05.05.2021   Patentblatt 2021/18**

(21) Anmeldenummer: **17768739.9**

(22) Anmeldetag: **11.09.2017**

(51) Int Cl.:
**G01F 23/296** (2006.01)     **G01F 25/00** (2006.01)

(86) Internationale Anmeldenummer:
**PCT/EP2017/072769**

(87) Internationale Veröffentlichungsnummer:
**WO 2018/077522 (03.05.2018 Gazette 2018/18)**

(54) **VERFAHREN ZUR ZUSTANDSÜBERWACHUNG EINES ELEKTROMECHANISCHEN RESONATORS**

METHOD FOR MONITORING THE CONDITION OF AN ELECTROMECHANICAL RESONATOR

PROCÉDÉ PERMETTANT DE SURVEILLER L'ÉTAT D'UN RÉSONATEUR ÉLECTROMÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2016   DE 102016120326**

(43) Veröffentlichungstag der Anmeldung:
**04.09.2019   Patentblatt 2019/36**

(73) Patentinhaber: **Endress+Hauser SE+Co. KG**
**79689 Maulburg (DE)**

(72) Erfinder:
• **BRENGARTNER, Tobias**
**79312 Emmendingen (DE)**

• **SAUTERMEISTER, Manuel**
**79650 Schopfheim (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 2 801 799        WO-A1-2009/057535**
**WO-A1-2016/096242        WO-A2-2006/042786**
**DE-A1-102005 036 409**

EP 3 532 808 B1

**Beschreibung**

Die vorliegende Erfindung betrifft ein Verfahren zur Zustandsüberwachung zumindest einer Komponente eines elektromechanischen Resonators mit zumindest einem piezoelektrischen Element. Der elektromechanische Resonator kann mittels eines elektrischen Anregesignals zu mechanischen Schwingungen angeregt werden, und die mechanischen Schwingungen des Resonators wiederum können in Form eines elektrischen Empfangssignals empfangen werden. Weiterhin betrifft die vorliegende Erfindung eine Vorrichtung zur Bestimmung und/oder Überwachung mindestens einer Prozessgröße eines Mediums, welche Vorrichtung ein erfindungsgemäßes Verfahren zur Zustandsüberwachung ausführen kann. Ein elektromechanischer Resonator umfasst ein Resonator-Element, welches zur Durchführung mechanischer Schwingungen geeignet ist, und eine elektromechanische Wandlereinheit, welche dergestalt ist, dass ein an, insbesondere an einer Oberfläche, der Wandlereinheit angelegtes elektrisches Potential zu mechanischen Deformationen der Wandlereinheit führt und umgekehrt. Im Fall der vorliegenden Erfindung umfasst die elektromechanische Wandlereinheit zumindest ein piezoelektrisches Element. Bei dem elektromechanischen Resonator kann es sich einerseits um ein im Wesentlichen einzelnes Bauteil, wie beispielsweise einen Keramikresonator oder um einen Schwingquarz handeln. Es kann sich aber beispielsweise auch um einen vibronischen Sensor handeln, welcher eine Antriebs-/Empfangseinheit in Form einer elektromechanischen Wandlereinheit und eine mechanisch schwingfähige Einheit als Resonator-Element umfasst, handeln.

Vibronische Sensoren finden vielfach Anwendung in der Prozess- und/oder Automatisierungstechnik. Im Falle von Füllstandsmessgeräten liegt die mechanisch schwingfähige Einheit häufig in Form einer Schwinggabel, eines Einstabs oder einer Membran vor. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät. Im fortlaufenden Betrieb wird die mechanisch schwingfähige Einheit mittels einer Antriebs-/Empfangseinheit in Form einer elektromechanischen Wandlereinheit zu mechanischen Schwingungen angeregt, welche im Fall der vorliegenden Anmeldung zumindest ein piezoelektrisches Element umfasst.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit. Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher die Summe aller Verstärkungen im Schwingkreis, bzw. der Verstärkungsfaktor $\geq 1$ ist und alle im Schwingkreis auftretenden Phasen ein Vielfaches von 360° ergeben, erfüllt sein.

Zur Anregung des vibronischen Sensors und damit einhergehend zur Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, mit sowohl analogen als auch digitalen Verfahren, bekannt geworden. Beispielsweise wird häufig eine vorgebbare Phasenverschiebung unter Verwendung eines geeigneten Filters eingestellt, oder die jeweils vorliegende Phasenverschiebung mittels eines Regelkreises auf eine vorgebbare Phasenverschiebung, den Sollwert, geregelt. Aus der DE102006034105A1 ist in dieser Hinsicht bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Gemäß der DE102005015547A1 wird wiederum ein Allpass-Filters eingesetzt. Das Einstellen einer Phasenverschiebung zwischen Anrege- und Empfangssignal anhand der jeweils vorliegenden Frequenz des Empfangssignals ist außerdem mittels eines sogenannten Frequenzsuchlaufs, wie beispielsweise in der der DE102009026685A1, DE102009028022A1, und DE102010030982A1 offenbart, oder mittels einer Phasenregelschleife (engl. Phase-Locked-Loop, PLL), wie in der DE102010030982A1 beschrieben, möglich.

Grundsätzlich sind bei einem vibronischen Sensor sowohl das Anregesignal als auch das Empfangssignal charakterisiert durch ihre Frequenz f, Amplitude A und/oder Phase $\phi$. Entsprechend werden Änderungen in diesen Größen üblicherweise zur Bestimmung der jeweiligen Prozessgröße, wie einem vorgegebenen Füllstand, eines Durchflusses, der Dichte und/oder der Viskosität, herangezogen. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, bei Vorliegen einer vorgebbaren Phasenverschiebung zwischen Anregesignal und Empfangssignal, unterschieden. Die Dichte und/oder Viskosität wiederum lassen sich mit einem derartigen Messgerät nur ermitteln, wenn die schwingfähige Einheit vom Medium bedeckt ist. Für die Bestimmung der Dichte und/oder Viskosität geeignete vibronische Sensoren und entsprechende Messprinzipien sind beispielsweise aus den Dokumenten DE10057974A1, DE102006033819A1, DE10050299A1, oder auch DE102007043811A1 bekannt geworden.

In vielen Einsatzgebieten für elektromechanische Resonatoren bzw. im Falle vieler Anwendungen von elektromechanischen Resonatoren ist es wichtig, dass der jeweilige elektromechanische Resonator möglichst konstant bleibende, gleichmäßige mechanische Schwingungen ausführt. Eine auftretende, zeitliche Änderung des Schwingungsverhaltens kann jedoch verschiedenste Ursachen haben. Insbesondere für elektrochemische Resonatoren, welche im Kontext eines Messgeräts verwendet werden, bedingen die Messprinzipien selbst häufig eine Änderung des Schwingungsverhaltens in Folge einer Messung. Für ein Messgerät zur Bestimmung und/oder Überwachung eines Füllstands treten beispielsweise durch Kontakt der schwingfähigen Einheit mit dem jeweiligen Medium eine Reduktion der Schwingungsamplitude und/oder eine Änderung der Schwingfrequenz auf.

Für ein geändertes Schwingungsverhalten gibt es aber ebenso vielfältige andere Ursachen, beispielsweise einen Defekt an zumindest einer Komponente des elektromechanischen Resonators oder ähnliches. Es kann also beliebig schwierig sein, eine messtechnisch bedingte Änderung des Schwingungsverhaltens von einer anderen Ursache für diese Änderung zu unterscheiden. Ein Verfahren zur Zustandüberwachung eines elektromechanischen Resonators ist in Dokument WO 2009/057535 offenbart.

Der vorliegenden Erfindung liegt die Aufgabe zugrunde, eine Möglichkeit anzugeben, mit welcher die oben beschriebene Problematik gelöst werden kann.

Diese Aufgabe wird gelöst durch das erfindungsgemäße Verfahren zur Zustandsüberwachung zumindest einer Komponente eines elektromechanischen Resonators gemäß Anspruch 1 und durch die Vorrichtung zur Bestimmung und/oder Überwachung mindestens einer Prozessgröße eines Mediums, welche zur Durchführung zumindest einer Ausgestaltung des erfindungsgemäßen Verfahrens geeignet ist.

Ein elektromechanischer Resonator, für welchen das erfindungsgemäße Verfahren einsetzbar ist, umfasst zumindest ein piezoelektrisches Element. Der elektromechanische Resonator ist ferner mittels eines elektrischen Anregesignals zu mechanischen Schwingungen anregbar, und dessen mechanische Schwingungen in Form eines elektrischen Empfangssignals empfangbar.

Gemäß dem erfindungsgemäßen Verfahren werden zu einem ersten und zumindest einem zweiten Zeitpunkt zumindest die folgenden Verfahrensschritte ausgeführt:

a) Ermitteln eines Verstärkungsfaktors des elektromechanischen Resonators,
b) Ermitteln einer mechanischen Güte des elektromechanischen Resonators, und
c) Bestimmen einer elektromechanischen Effizienz des elektromechanischen Resonators zumindest aus dem Verstärkungsfaktor und der mechanischen Güte.

Ferner beinhaltet das erfindungsgemäße Verfahren, dass anhand eines Vergleichs zumindest der zum ersten Zeitpunkt bestimmten elektromechanischen Effizienz und der zum zweiten Zeitpunkt bestimmten elektromechanischen Effizienz eine zeitliche Änderung der elektromechanischen Effizienz berechnet wird. Die berechnete zeitliche Änderung der elektromechanischen Effizienz wird anschließend mit einem vorgebbaren Grenzwert für die Änderung der elektromechanischen Effizienz verglichen und aus dem Vergleich ein Zustandsindikator ermittelt.

Die elektromechanische Effizienz ist im Prinzip ein Maß für die Güte (von der mechanischen Güte der mechanischen Schwingungen zu unterscheiden) der elektromechanischen Wandlung, beispielsweise dem piezoelektrischen Effekt. Es handelt sich um eine dimensionslose Größe, welche mit dem Vermögen des piezoelektrischen Elements, elektrische Energie in mechanische Energie umzuwandeln, zusammenhängt. Typische Werte für die elektromechanische Effizienz $k$ eines in Resonanz betriebenen elektromechanischen Resonators eines vibronischen Sensors liegen bei $k=0,25-0,5$. Im Falle, dass das Resonator-Element keine Resonanzschwingungen ausführt, verringert sich die elektromechanische Effizienz deutlich.

In die elektromechanische Effizienz fließen verschiedene vom jeweiligen elektromechanischen Resonator abhängige Größen, insbesondere Konstanten, mit ein, wie beispielsweise die piezoelektrischen Kopplungsfaktoren, welche den Grad des piezoelektrischen Effekts in Abhängigkeit der jeweiligen Schwingungsform des piezoelektrischen Körpers angeben, oder die Permittivität des Piezoelements, welche wiederum ein Maß für dessen Polarisierbarkeit darstellt.

Vorteilhaft lässt sich anhand des erfindungsgemäßen Verfahrens aus einer zeitlichen Änderung der elektromechanischen Effizienz ein Zustandsindikator ermitteln. Bei dem Zustandsindikator handelt es sich bevorzugt um eine Größe, anhand welcher eine Aussage über den Zustand zumindest einer Komponente des elektromechanischen Resonators getroffen werden kann, oder um die Aussage selbst. Beispielsweise kann es sich um eine Aussage über das Schwingungsverhalten des elektromechanischen Resonators oder um eine mit dem Schwingungsverhalten zusammenhängende Aussage handeln. Im Falle eines für ein Messgerät eingesetzten elektromechanischen Resonators kann beispielsweise vorteilhaft zwischen einer messtechnisch bedingten Änderung des Schwingungsverhaltens und einer durch eine andere Ursache hervorgerufene Änderung desselben unterschieden werden. Eine durch den Resonator selbst bedingte Änderung des Schwingungsverhaltens kann die jeweiligen Messergebnisse stark verfälschen. Entsprechend kann durch das erfindungsgemäße Verfahren vorteilhaft ferner eine hohe Messgenauigkeit gewährleistet werden. Wird ein durch den elektromechanischen Resonator selbst bedingte Änderung des Schwingungsverhaltens erkannt, kann der Resonator bzw. die zumindest eine Komponente des Resonators überprüft und ggf. ausgetauscht oder repariert werden.

Gemäß einer Ausgestaltung des erfindungsgemäßen Verfahrens ist der Zustandsindikator ein Maß für eine Alterung der zumindest einen Komponente, und/oder für eine, insbesondere durch die Alterung der zumindest einen Komponente bedingte, Änderung einer Schwingungsamplitude und/oder einer Resonanzfrequenz des elektromechanischen Resonators. Im bevorzugten Falle, in welchem diese Komponente das piezoelektrische Element des elektromechanischen Resonators darstellt, ist eine Alterung u.a. durch eine kontinuierliche Abnahme der remanenten Polarisation des Materials dieses Elements bedingt. Nach einer Polarisation ist das Material bestrebt, seinen natürlichen, nicht verformten Gitterzustand wieder einzunehmen. Das Ausmaß bzw. die Stärkung derartiger Alterungsprozesse hängt dabei stark von der Verwendung des jeweiligen piezoelektrischen Materials ab, und wird üblicherweise in Form einer dimensionslosen logarithmischen Degradation charakteristischer Kenndaten des Materials angegeben.

Eine Ausgestaltung des Verfahrens sieht vor, dass der Verstärkungsfaktor aus dem Verhältnis, insbesondere dem Betragsverhältnis, des Anregesignals, insbesondere einer Anregespannung, und des Empfangssignals, insbesondere einer Empfangsspannung, ermittelt wird. Der Verstärkungsfaktor beschreibt also im Prinzip das Verhältnis der Amplituden des Anregesignals und des Empfangssignals.

Es ist von Vorteil, wenn der elektromechanische Resonator zu Resonanzschwingungen bei einer Resonanzfrequenz angeregt wird. Entsprechend wird auch der Verstärkungsfaktor bevorzugt für den Fall des Vorliegens einer resonanten Schwingung des elektromechanischen Resonators ermittelt.

Es ist ebenso von Vorteil, wenn zur Anregung des elektromechanischen Resonators eine vorgebbare Phasenverschiebung zwischen Anregesignal und Empfangssignal eingestellt wird. Bevorzugt wird die Phasenverschiebung derart gewählt, dass die Schwingkreisbedingung erfüllt ist. In diesem Falle liegt eine resonante Schwingung des elektromechanischen Resonators vor.

Die erfindungsgemäße Ausgestaltung des Verfahrens sieht vor, dass die mechanische Güte anhand einer Steigung einer Phasenverschiebung zwischen Anregesignal und Empfangssignal als Funktion einer Frequenz bei Vorliegen einer Resonanzschwingung mit der Resonanzfrequenz ermittelt wird. Die mechanische Güte des elektromechanischen Resonators, auch als Gütefaktor, Q-Faktor oder Resonanzschärfe bezeichnet, ist ein Maß für die Dämpfung bzw. für den Energieverlust der mechanischen Schwingungen des elektromechanischen Resonators. Eine hohe Güte ist gleichbedeutend mit einer geringen Dämpfung.

In Bezug auf die Bestimmung der mechanischen Güte sei auf die bisher unveröffentlichte deutsche Patentanmeldung mit dem Aktenzeichen 102016112743.4, in welcher ein Verfahren zur Bestimmung der Dämpfung anhand der Steigung einer Phasenkurve beschrieben ist, verwiesen. Die mechanische Güte lässt sich aus der Dämpfung auf einfache Weise ermitteln. Ferner ist in dieser Hinsicht aus der deutschen Patentanmeldung DE10050299A1 bekannt geworden, die Viskosität eines Mediums anhand der Steigung der Phase zwischen Anregesignal und Empfangssignal zu berechnen.

Die erfindungsgemäße Ausgestaltung des Verfahrens sieht vor, dass die mechanische Güte anhand des zeitlichen Verlaufs der Amplitude des Empfangssignals nach einem Abschalten des Anregesignals zu bestimmen. Eine Messung des zeitlichen Verlaufs der Amplitude des Empfangssignals nach einem Abschalten des Anregesignals wurde in der DE102007043811A1 vorgeschlagen. Darüber hinaus ist in der bisher unveröffentlichte deutsche Patentanmeldung mit dem Aktenzeichen 102016112743.4 bekannt geworden, aus dem Abklingverhalten auf die Dämpfung oder eine von der Dämpfung abhängige Größe geschlossen und anschließend anhand der Dämpfung die Dichte und/oder Viskosität zu bestimmen. Aus der Dämpfung lässt sich wieder auf einfache Weise die mechanische Güte bestimmen.

Die erfindungsgemäße Ausgestaltung des Verfahrens sieht schließlich vor, dass die mechanische Güte anhand einer Modulation des Anregesignals bestimmt wird. Auf welche Weise anhand einer Modulation des Anregesignals die Dämpfung bestimmt werden kann, ist ausführlich in der bisher nicht veröffentlichten deutschen Patentanmeldung mit dem Aktenzeichen 102015101891.8 beschrieben worden. Bei dieser Methode ist es vorteilhaft ausreichend, nur eine einzige vorgebbare Phasenverschiebung zwischen dem Anregesignal und Empfangssignal einzustellen, was einer Anregung des Sensors bei einer einzigen Frequenz entspricht.

Auf alle vier in Bezug auf die Bestimmung der mechanischen Güte bzw. in Bezug auf die Bestimmung der Dämpfung genannten Patentanmeldungen wird im Folgenden vollumfänglich Bezug genommen.

Gemäß einer Ausgestaltung, in welcher der elektromechanische Resonator eine mechanisch schwingfähige Einheit umfasst, welche kraftschlüssig und/oder stoffschlüssig mit dem piezoelektrischen Element verbunden ist, wird aus einer Änderung der elektromechanischen Effizienz über den vorgebbaren Grenzwert hinaus auf eine Alterung des piezoelektrischen Elements und/oder eines Klebstoffes, mittels welchem Klebstoff das piezoelektrische Element an der schwingfähigen Einheit befestigt ist, geschlossen.

Für diese Ausgestaltung handelt es sich bei der mechanisch schwingfähigen Einheit vorteilhaft um eine Membran, einen Einstab oder um eine Schwinggabel.

In einer weiteren Ausgestaltung des Verfahrens wird zumindest anhand des Empfangssignals zumindest eine Prozessgröße eines Mediums in einem Behältnis, insbesondere ein vorgebbarer Füllstand, die Dichte oder die Viskosität des Mediums, bestimmt.

Eine Ausgestaltung des erfindungsgemäßen Verfahrens beinhaltet, dass im fortlaufenden Betrieb oder in bestimmbaren Zeitabständen die Umgebungstemperatur ermittelt und bei der Bestimmung der elektromechanischen Effizienz oder der zeitlichen Änderung der elektromechanischen Effizienz berücksichtigt wird. Diese Ausgestaltung ist insbesondere geeignet, das Vorliegen unterschiedlichen Temperaturen zum ersten und zumindest zweiten Zeitpunkt, zu welchen jeweils die elektromechanische Effizienz bestimmt wird, zu berücksichtigen. Somit kann eine Fehldiagnose im Falle einer zeitlichen Änderung der elektromechanischen Effizienz über den vorgebbaren Grenzwert hinaus aufgrund reiner Temperatureffekte vorgebeugt werden. Um die Temperatureffekte zu berücksichtigen, kann beispielsweise eine Polynomfunktion herangezogen werden, welche die elektromechanische Effizienz als Funktion der Temperatur beschreibt.

Die der Erfindung zugrunde liegende Aufgabe wird weiterhin gelöst durch eine Vorrichtung zur Bestimmung und/oder Überwachung mindestens einer Prozessgröße eines Mediums umfassend einen elektromechanischen Resonator mit zumindest einem piezoelektrischen Element, welche Vorrichtung zur Durchführung zumindest eines Verfahrens nach zumindest einem der vorhergehenden Ansprüche ausgestaltet ist. Bei der Vorrichtung handelt es sich beispielsweise um einen vibronischen Sensor.

Es sei darauf verwiesen, dass die Ausgestaltungen in Zusammenhang mit dem erfindungsgemäßen Verfahren sich mutatis mutandis auch auf die erfindungsgemäße Vorrichtung anwenden lassen.

Die Erfindung sowie ihre vorteilhaften Ausgestaltungen werden nachfolgend anhand der Figuren Fig. 1 - Fig. 2 näher beschrieben. Es zeigt:

Fig. 1: eine schematische Skizze eines vibronischen Sensors, und

Fig. 2: ein schematisches Diagramm zur zeitlichen Änderung der elektromechanischen Effizienz in Abhängigkeit des Verstärkungsfaktors und der Güte.

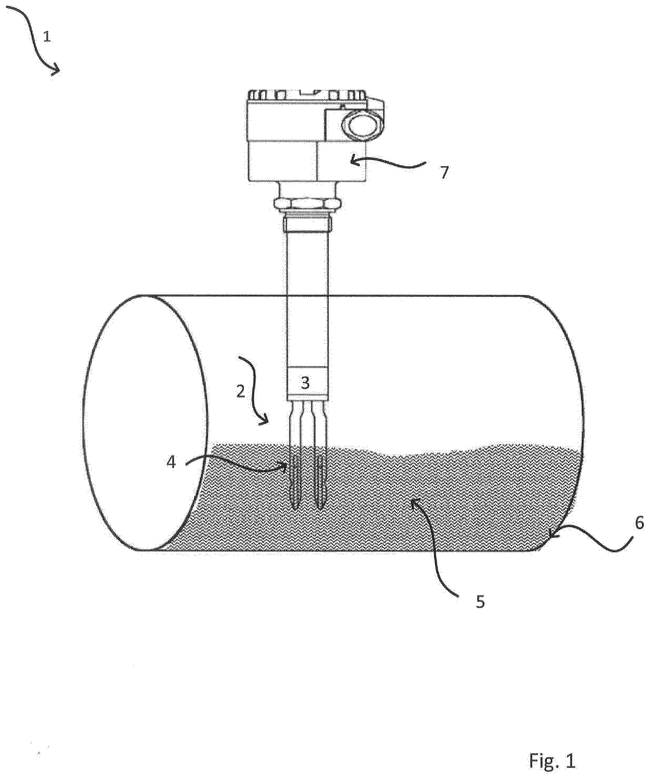

Die nachfolgende Beschreibung bezieht sich ohne Beschränkung der Allgemeinheit der vorliegenden Erfindung der Einfachheit halber auf einen vibronischen Sensor 1, wie in Fig. 1 gezeigt. Der vibronische Sensor 1 beinhaltet einen elektromechanischen Resonator 2, welcher sich aus eine Antriebs-/Empfangseinheit 3 in Form einer elektromechanischen Wandlereinheit mit zumindest einem piezoelektrischen Element und einer mechanisch schwingfähigen Einheit 4 zusammensetzt. Die Antriebs-/Empfangseinheit 3 kann beispielsweise als sog. Bimorph-Antrieb ausgestaltet sein, bei welchem das zumindest eine piezoelektrische Element stoffschlüssig auf die mechanisch schwingfähige Einheit 4 geklebt ist. Es kann sich aber auch um einen Stapelantrieb, welcher eine kraftschlüssige Ankopplung an die schwingfähige Einheit 4 beinhaltet, handeln. Weitere Ausgestaltungen geeigneter Antriebs-/Empfangseinheiten 3 für einen vibronischen Sensor 1 sind dem Fachmann geläufig und fallen ebenfalls unter die vorliegende Erfindung.

Zur Bestimmung und/oder Überwachung ragt die schwingfähige Einheit 1 des vibronischen Sensors 1 zumindest zeitweise in ein Medium 5, welches sich beispielsweise in einem Behältnis 6, wie einem Behälter oder einem Rohr, befindet, ein.

Die schwingfähige Einheit 4 wird über die Antriebs-/Empfangseinheit 5 mittels eines elektrischen Anregesignals zu mechanischen Schwingungen angeregt. Umgekehrt werden die mechanischen Schwingungen der schwingfähigen Einheit 4 über die Antriebs-/Empfangseinheit 3 in Form eines elektrischen Empfangssignals empfangen und im Hinblick auf die jeweilige Prozessgröße ausgewertet. Dies geschieht in einer geeignet ausgestalteten Elektronikeinheit 7, welche der Signalerfassung, -auswertung und/oder -speisung dient.

Für viele im Kontext vibronischer Sensoren 1 bekannt gewordene Verfahren zur Bestimmung und/oder Überwachung der jeweiligen Prozessgrößen, insb. Füllstand, Dichte und/oder Viskosität, spielen die Amplituden des Anregesignals und Empfangssignals, bzw. deren Verhältnis, eine signifikante Rolle. Entsprechend kann ein temperatur- und/oder alterungsbedingter Drift dieser Größen zu Verfälschungen bei der Ermittlung eines Messwerts für die jeweilige Prozessgröße führen.

Das erfindungsgemäße Verfahren erlaubt es nun, eine nicht durch die jeweilige Messung selbst hervorgerufene Änderung der Amplitude des Anrege- und/oder Empfangssignals zu erkennen. Anschließend kann ein geändertes Schwingungsverhalten entweder auf geeignete Art und Weise im fortlaufenden Betrieb des jeweiligen Sensors 1 kompensiert werden, oder ggf. defekte Komponenten des Sensors 1, insb. des elektromechanischen Resonators 2, ausgetauscht werden.

Zur Ermittlung des jeweiligen Zustandsindikators werden im Falle eines zu resonanten Schwingungen angeregten vibronischen Sensors 1 folgende Schritte vorgenommen:

Die elektromechanische Effizienz zu einem Zeitpunkt t für eine resonante Schwingung mit der Eigenfrequenz $\omega_{90}$ des vibronischen Sensors 1 wird anhand des Verstärkungsfaktors $V_{90}$ bei der Resonanzfrequenz $\omega_{90}$ und der mechanischen Güte Q ermittelt.

Der Verstärkungsfaktor $V_{90}$, kann, bei Vorliegen der resonanten Schwingung mit der Frequenz bzw. Kreisfrequenz $\omega_{90}$, aus dem Verhältnis der Amplituden des Anregesignals, hier in Form einer Anregespannung, $A_A$ und dem Empfangssignal, hier in Form einer Empfangsspanung, $A_E$, also im Prinzip anhand einer Übertragungsfunktion G des elektromechanischen Resonators, bestimmt werden:

$$V_{90} = \frac{A_E}{A_A}\bigg|_{\omega=\omega_{90}} = k(t) \cdot Q$$

Die mechanische Güte des elektromechanischen Resonators 2 kann beispielsweise anhand der Steigung der Phasenverschiebung $\Delta\varphi$ zwischen Anregesignal und Empfangssignal als Funktion einer Frequenz $\omega_{90}$ ermittelt werden:

$$\frac{d\varphi}{d\omega}\bigg|_{\omega=\omega_{90}} = \frac{2 \cdot Q}{\omega_{90}}$$

$$Q = \frac{\frac{d\varphi}{d\omega}\big|_{\omega=\omega_{90}} \cdot \omega_{90}}{2}$$

Bei einer resonanten Schwingung liegt in diesem Falle eine Phasenverschiebung von $\Delta\varphi=-90°$ zwischen Anregesignal und Empfangssignal vor.

Für die elektromechanische Effizienz gilt dann:

$$k(t) = \frac{V_{90}}{Q} = \frac{2 \cdot \left|\frac{A}{A_S}\right|_{\omega=\omega_{90}}}{\frac{d\varphi}{d\omega}\big|_{\omega=\omega_{90}} \cdot \omega_{90}}$$

Der Verstärkungsfaktor $V_{90}$ und damit einhergehend die Schwingungsamplitude des vibronischen Sensors 1, hängt sowohl von der elektromechanischen Effizienz k(t) als auch von der Güte Q ab.

Um den Zustand des elektromechanischen Resonators 2 im fortlaufenden Betrieb zu überwachen, wird die elektromechanische Effizienz k(t) zu zumindest zwei Zeitpunkten $t_1$ und $t_2$ bestimmt und anschließend aus der Differenz $\Delta k(t)=k(t1)-k(t2)$ eine zeitliche Änderung der elektromechanischen Effizienz ermittelt. Ist die zeitliche Änderung $\Delta k(t)$ größer als ein vorgebbarer Grenzwert $\Delta k$, so kann beispielsweise auf eine Alterung zumindest einer Komponente des elektromechanischen Resonators geschlossen werden. Ferner bietet es sich an, nach der Produktion des Resonators zum Zeitpunkt $t_0$ direkt die elektromechanische Effizienz $k(t_0)$ zu ermitteln und auch zu diesem Zeitpunkt den vorgebbaren Grenzwert $\Delta k$ für die Änderung der elektromechanischen Effizienz $\Delta k(t)$ vorzugeben.

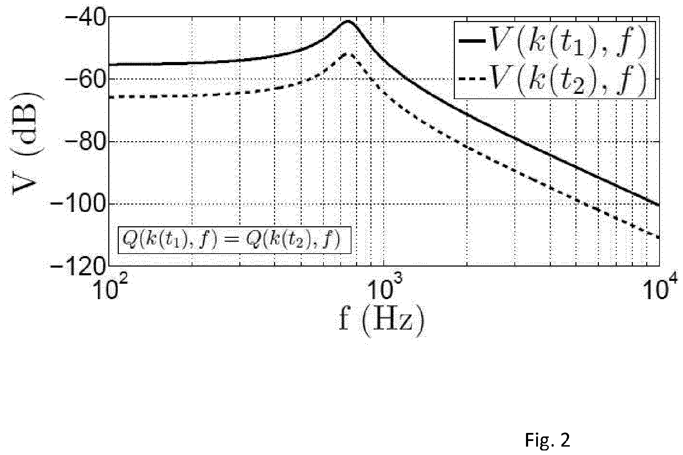

Fig. 2 zeigt beispielhaft ein Diagramm zur Änderung der elektromechanischen Effizienz in Abhängigkeit des Verstärkungsfaktors und der Güte eines elektromechanischen Resonators 2. Gezeigt ist der Verstärkungsfaktor V als Funktion der Frequenz f für zwei verschiedene Werte $k_1(t)$ und $k_2(t)$ der elektromechanischen Effizienz. Eine Änderung der elektromechanischen Effizienz bewirkt also eine Änderung des Verstärkungsfaktors V über das gesamte Frequenzspektrum f. Die Güte Q des elektromechanischen Resonators 2 dagegen bleibt von einer zeitlichen Änderung der elektromechanischen Effizienz im Wesentlichen unbeeinflusst, so dass anhand der Güte Q und des Verstärkungsfaktors V eine Änderung der elektromechanischen Effizienz $\Delta k(t)$ in Form eines Zustandsindikators ermittelbar ist.

Bezugszeichenliste

| 1 | Vibronischer Sensor |
|---|---|
| 2 | Elektromechanischer Resonator |
| 3 | Antriebs-/Empfangseinheit |
| 4 | Schwingfähige Einheit |
| 5 | Medium |
| 6 | Behälter |
| 7 | Elektronikeinheit |

| | |
|---|---|
| $A_A$ | Amplitude des Anregesignal |
| $A_E$ | Amplitude des Empfangssignal |
| $\Delta\Phi$ | vorgebbare Phasenverschiebung |
| Q | mechanische Güte |
| $V_{90}$ | Verstärkungsfaktor bei Resonanz |
| $\omega_{90}$ | Resonanzfrequenz/Resonanzkreisfrequenz |
| k(t) | elektromechanische Effizienz |
| $t_0$, $t_1$, $t_2$ | Zeitpunkte zu denen k(t) bestimmt wird |
| $\Delta k(t)$ | zeitliche Änderung der elektromechanische Effizienz |
| $\Delta k$ | vorgebbarer Grenzwert für die zeitliche Änderung der elektromechanische Effizienz |
| T | Umgebungstemperatur |

Patentansprüche

1. Verfahren zur Zustandsüberwachung zumindest einer Komponente (3,4) eines elektromechanischen Resonators (2) mit zumindest einem piezoelektrischen Element (4), welcher mittels eines elektrischen Anregesignals ($A_A$) zu mechanischen Schwingungen anregbar ist, und dessen mechanische Schwingungen in Form eines elektrischen Empfangssignals ($A_E$) empfangbar sind, umfassend folgende Verfahrensschritte:

- zu einem ersten Zeitpunkt ($t_1$):

a. Ermitteln eines Verstärkungsfaktors ($V_{90}$) des elektromechanischen Resonators (2),

b. Ermitteln einer mechanischen Güte (Q) des elektromechanischen Resonators (2)

■ anhand einer Steigung einer Phasenverschiebung ($\Delta\varphi$) zwischen Anregesignal ($A_A$)

und Empfangssignal ($A_E$) als Funktion einer Frequenz ($\omega$) bei Vorliegen einer Resonanzschwingung mit der Resonanzfrequenz ($\omega_{90}$),

■ anhand des zeitlichen Verlaufs der Amplitude des Empfangssignals ($A_E$) nach einem Abschalten des Anregesignals ($A_A$), oder

■ anhand einer Modulation des Anregesignals ($A_A$).

, und

c. Bestimmen einer elektromechanischen Effizienz ($k(t_1)$) des elektromechanischen Resonators (2) zumindest aus dem Verstärkungsfaktor ($V_{90}$) und der mechanischen Güte (Q),

- Wiederholung der Verfahrensschritte a) - c) zumindest zu einem zweiten Zeitpunkt ($t_2$)
- Berechnen einer zeitlichen Änderung der elektromechanischen Effizienz ($\Delta k(t)$) anhand eines Vergleichs zumindest der zum Zeitpunkt ($t_1$) bestimmten elektromechanischen Effizienz ($k(t1)$) und der zum Zeitpunkt ($t_2$) bestimmten elektromechanischen Effizienz ($k(t_2)$), und
- Vergleichen der zeitlichen Änderung der elektromechanischen Effizienz ($\Delta k(t)$) mit einem vorgebbaren Grenzwert ($\Delta k$) für die Änderung der elektromechanischen Effizienz ($\Delta k(t)$) und Ermitteln eines Zustandsindikators aus dem Vergleich.

2. Verfahren nach Anspruch 1,
wobei der Zustandsindikator ein Maß für eine Alterung der zumindest einen Komponente (3,4), und/oder für eine, insbesondere durch die Alterung der zumindest einen Komponente (3,4) bedingte, Änderung einer Schwingungsamplitude und/oder einer Resonanzfrequenz ($\omega_{90}$) des elektromechanischen Resonators (2) ist.

3. Verfahren nach Anspruch 1 oder 2,
wobei der Verstärkungsfaktor ($V_{90}$) aus dem Verhältnis des Anregesignals ($A_A$), insbesondere einer Anregespannung, und des Empfangssignals ($A_E$), insbesondere einer Empfangsspannung, ermittelt wird.

4. Verfahren nach zumindest einem der vorhergehenden Ansprüche,
wobei der elektromechanische Resonator (2) zu Resonanzschwingungen bei einer Resonanzfrequenz ($\omega_{90}$) angeregt wird.

5. Verfahren nach zumindest einem der vorhergehenden Ansprüche,
wobei zur Anregung des elektromechanischen Resonators (2) eine vorgebbare Phasenverschiebung ($\Delta\varphi$) zwischen Anregesignal ($A_A$) und Empfangssignal ($A_E$) eingestellt wird.

6. Verfahren nach zumindest einem der vorhergehenden Ansprüche,
wobei der elektromechanische Resonator (2) eine mechanisch schwingfähige Einheit (4) umfasst, welche kraftschlüssig und/oder stoffschlüssig mit dem piezoelektrischen Element (3) verbunden ist und wobei aus einer Änderung der elektromechanischen Effizienz ($\Delta k(t)$) über den vorgebbaren Grenzwert ($\Delta k$) hinaus auf eine Alterung des piezoelektrischen Elements (3) und/oder eines Klebstoffes, mittels welchem Klebstoff das piezoelektrische Element (3) an der schwingfähigen Einheit (4) befestigt ist, geschlossen wird.

7. Verfahren nach Anspruch 6,
wobei es sich bei der mechanisch schwingfähigen Einheit (4) um eine Membran, einen Einstab oder um eine Schwinggabel handelt.

8. Verfahren nach zumindest einem der vorhergehenden Ansprüche,
wobei zumindest anhand des Empfangssignals ($A_E$) zumindest eine Prozessgröße eines Mediums (5) in einem Behältnis (6), insbesondere ein vorgebbarer Füllstand, die Dichte oder die Viskosität des Mediums (5), bestimmt wird.

9. Verfahren nach zumindest einem der vorhergehenden Ansprüche,
wobei im fortlaufenden Betrieb oder in bestimmbaren Zeitabständen die Umgebungstemperatur (T) ermittelt und bei der Bestimmung der elektromechanischen Effizienz ($k(t)$) oder der zeitlichen Änderung der elektromechanischen Effizienz ($\Delta k(t)$) berücksichtigt wird.

10. Vorrichtung (1) zur Bestimmung und/oder Überwachung mindestens einer Prozessgröße eines Mediums (5) umfassend einen elektromechanischen Resonator (2) mit zumindest einem piezoelektrischen Element (3), welche Vorrichtung (1) zur Durchführung zumindest eines Verfahrens nach zumindest einem der vorhergehenden Ansprüche ausgestaltet ist.

**Claims**

1. Procedure for monitoring the state at least of a component (3, 4) of an electromechanical resonator (2) with at least a piezoelectric element (4), which can be excited to produce mechanical vibrations by means of an electrical excitation signal ($A_A$), and whose mechanical vibrations can be received in the form of an electrical reception signal ($A_E$), wherein said procedure comprises the following steps:

   - at a first point in time (ti) :

      a. Determination of an amplification factor ($V_{90}$) of the electromechanical resonator (2),
      b. Determination of a mechanical quality (Q) of the electromechanical resonator (2)

         ■ on the basis of a slope of a phase shift ($\Delta\varphi$) between the excitation signal ($A_A$) and the reception signal ($A_E$) as a function of a frequency ($\omega$) in the presence of a resonance vibration with a resonance frequency ($\omega_{90}$),
         ■ on the basis of the change over time of the amplitude of the reception signal ($A_E$) following the deactivation of the excitation signal ($A_A$), or
         ■ on the basis of a modulation of the excitation signal ($A_A$), and

      c. Determination of an electromechanical efficiency (k(ti)) of the electromechanical resonator (2) at least from the amplification factor ($V_{90}$) and the mechanical quality (Q),

   - Repetition of the procedural steps a) - c) at least at a second point in time ($t_2$)
   - Calculation of a change over time of the electromechanical efficiency ($\Delta k(t)$) on the basis of a comparison between at least the electromechanical efficiency (k(ti)) determined at the point in time (ti) and the electromechanical efficiency ($k(t_2)$) determined at the point in time ($t_2$), and
   - Comparison of the change over time of the electromechanical efficiency ($\Delta k(t)$) with a predefinable limit value ($\Delta k$) for the change in electromechanical efficiency ($\Delta k(t)$), and determination of a state indicator from the comparison.

2. Procedure as claimed in Claim 1, wherein the state indicator is an indicator for an aging of the at least one component (3, 4), and/or of a change - particularly caused by the aging of the at least one component (3, 4) - of a vibration amplitude and/or of a resonance frequency ($\omega_{90}$) of the electromechanical resonator (2).

3. Procedure as claimed in Claim 1 or 2, wherein the amplification factor ($V_{90}$) is determined from the ratio of the excitation signal ($A_A$), particularly an excitation voltage, to the reception signal ($A_E$), particularly a reception voltage.

4. Procedure as claimed in at least one of the previous claims, wherein the electromechanical resonator (2) is excited to produce resonance vibrations at a resonance frequency ($\omega_{90}$).

5. Procedure as claimed in at least one of the previous claims, wherein a predefinable phase shift ($\Delta\varphi$) between the excitation signal ($A_A$) and the reception signal ($A_E$) is regulated for the excitation of the electromechanical resonator (2).

6. Procedure as claimed in at least one of the previous claims, wherein the electromechanical resonator (2) comprises a unit capable of vibrating mechanically (4), wherein said unit is connected by a force-fit and/or substanceto-substance connection to the piezoelectric element (3), and wherein a change in the electromechanical efficiency ($\Delta k(t)$)above the predefinable limit value ($\Delta k$) is used to identify an aging of the piezoelectric element (3) and/or an adhesive, by means of said adhesive the piezoelectric element (3) is fixed on the unit capable of vibrating mechanically (4).

7. Procedure as claimed in Claim 6, wherein the unit capable of vibrating mechanically (4) is a membrane, a single rod or a tuning fork.

8. Procedure as claimed in at least one of the previous claims, wherein at least a process variable of a medium (5) in a vessel (6), particularly a predefinable level, the density or the viscosity of the medium (5), is determined at least on the basis of the reception signal ($A_E$).

9. Procedure as claimed in at least one of the previous claims, wherein the ambient temperature (T) is determined during continuous operation or at definable intervals, and is taken into consideration when determining the electromechanical efficiency (k(t)) or the change over time of the electromechanical efficiency ($\Delta$k(t)).

10. Apparatus (1) designed to determine and/or monitor the at least one process variable of a medium (5) comprising an electromechanical resonator (2) with at least a piezoelectric element (3), wherein said apparatus (1) is designed to perform at least a procedure as claimed in at least one of the previous claims.

**Revendications**

1. Procédé destiné à la surveillance de l'état d'au moins un composant (3, 4) d'un résonateur électromécanique (2) avec au moins un élément piézoélectrique (4), lequel élément peut être excité en vibrations mécaniques au moyen d'un signal d'excitation électrique ($A_A$), et dont les vibrations mécaniques peuvent être reçues sous la forme d'un signal de réception électrique ($A_E$),
lequel procédé comprend les étapes suivantes :

- en un premier instant ($t_1$) :

a. Détermination d'un facteur d'amplification ($V_{90}$) du résonateur électromécanique (2),
b. Détermination d'une qualité mécanique (Q) du résonateur électromécanique (2)

■ sur la base d'une pente d'un déphasage ($\Delta\varphi$) entre le signal d'excitation ($A_A$) et le signal de réception ($A_E$) en fonction d'une fréquence ($\omega$), en présence d'une vibration de résonance à la fréquence de résonance ($\omega_{90}$),
■ sur la base de la variation dans le temps de l'amplitude du signal de réception ($A_E$) après une désactivation du signal d'excitation ($A_A$), ou
■ sur la base d'une modulation du signal d'excitation ($A_A$), et

c. Détermination d'un rendement électromécanique ($k(t_1)$) du résonateur électromécanique (2) au moins à partir du facteur d'amplification ($V_{90}$) et de la qualité mécanique (Q),

- Répétition des étapes de procédé a) - c) au moins en un deuxième instant ($t_2$)
- Calcul d'une variation dans le temps du rendement électromécanique ($\Delta$k(t))sur la base d'une comparaison entre au moins le rendement électromécanique (k(ti)) déterminé à l'instant ($t_1$) et le rendement électromécanique ($k(t_2)$) déterminé à l'instant ($t_2$), et

- Comparaison du changement dans le temps du rendement électromécanique ($\Delta$k(t))avec une valeur limite ($\Delta$k) prédéfinissable pour le changement du rendement électromécanique ($\Delta$k(t)), et détermination d'un indicateur d'état à partir de la comparaison.

2. Procédé selon la revendication 1, pour lequel l'indicateur d'état est une mesure d'un vieillissement de l'au moins un composant (3, 4), et/ou d'un changement - notamment provoqué par le vieillissement de l'au moins un composant (3, 4) - d'une amplitude de vibration et/ou d'une fréquence de résonance ($\omega_{90}$) du résonateur électromécanique (2).

3. Procédé selon la revendication 1 ou 2, pour lequel le facteur d'amplification ($V_{90}$) est déterminé à partir du rapport entre le signal d'excitation ($A_A$), notamment une tension d'excitation, et le signal de réception ($A_E$), notamment une tension de réception.

4. Procédé selon au moins l'une des revendications précédentes, pour lequel le résonateur électromécanique (2) est excité à des vibrations de résonance à une fréquence de résonance ($\omega_{90}$).

5. Procédé selon au moins l'une des revendications précédentes, pour lequel un déphasage ($\Delta\varphi$) prédéfinissable entre le signal d'excitation ($A_A$) et le signal de réception ($A_E$) est réglé pour l'excitation du résonateur électromécanique (2).

6. Procédé selon au moins l'une des revendications précédentes, pour lequel le résonateur électromécanique (2) comprend une unité apte à vibrer mécaniquement (4), laquelle unité est reliée par friction et/ou par liaison de matière à l'élément piézoélectrique (3), et procédé pour lequel un changement du rendement électromécanique ($\Delta$k(t)) au-delà de la valeur limite ($\Delta$k) prédéfinissable est utilisé pour déduire le vieillissement de l'élément piézoélectrique (3) et/ou d'un adhésif, adhésif au moyen duquel l'élément piézoélectrique (3) est fixé à l'unité apte à vibrer (4).

7. Procédé selon la revendication 6, pour lequel il s'agit, concernant l'unité apte à vibrer mécaniquement (4), d'une membrane, d'une tige unique ou d'une fourche vibrante.

8. Procédé selon au moins l'une des revendications précédentes, pour lequel au moins une grandeur de process d'un produit (5) dans un réservoir (6), notamment un niveau prédéfinissable, la densité ou la viscosité du produit (5), est déterminée au moins sur la base du signal reçu ($A_E$).

9. Procédé selon au moins l'une des revendications précédentes,
   pour lequel la température ambiante (T) est déterminée pendant un fonctionnement continu ou à des intervalles de temps déterminables, et est prise en compte dans la détermination du rendement électromécanique (k(t)) ou de la variation dans le temps du rendement électromécanique ($\Delta$k(t)).

10. Dispositif (1) destiné à la détermination et/ou à la surveillance d'au moins une grandeur de process d'un produit (5) comprenant un résonateur électromécanique (2) avec au moins un élément piézoélectrique (3), lequel dispositif (1) est conçu pour la réalisation d'au moins un procédé selon au moins l'une des revendications précédentes.

Fig. 1

Fig. 2

**EP 3 532 808 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 10057974 A1
- DE 102006033819 A1
- DE 10050299 A1
- DE 102007043811 A1
- WO 2009057535 A
- DE 102016112743
- DE 102015101891